# EUROPEAN PATENT APPLICATION

(11) **EP 1 602 565 A1**
(43) Date of publication of application: **07.12.2005**
(21) Application number: 04715459.6
(22) Date of filing: 27.02.2004
(51) Int. Cl.: B62D 25/20, B62D 33/067, E02F 9/00

(54) **REAR END SMALL REVOLVING TYPE HYDRAULIC SHOVEL**

(30) Priority: 27.02.2003 JP 2003051902
(71) Applicant: KOMATSU LTD., Minato-ku, Tokyo 107-8414 (JP)
(72) Inventor: SUGIYAMA, Kiyoshi, c/o Komatsu Ltd. Awazu Plant, Komatsu-shi, Ishikawa 923-0392 (JP); KITAJIMA, Osamu, c/o Komatsu Ltd. Awazu Plant, Komatsu-shi, Ishikawa 923-0392 (JP); KAMIMAE, Takeshi, c/o Komatsu Ltd. Awazu Plant, Komatsu-shi, Ishikawa 923-0392 (JP); YAMAMOTO, Hiroshi, c/o Komatsu Ltd. Awazu Plant, Komatsu-shi, Ishikawa 923-0392 (JP)
(74) Representative: Grünecker, Kinkeldey, Stockmair & Schwanhäusser Anwaltssozietät
(86) International application number: PCT/JP2004/002368
(87) International publication number: WO 2004/076265

(57) **Abstract**

A rear end small revolving type hydraulic shovel (tight tail revolving hydraulic excavator) that can improve maintainability of an engine and secures a wide foot space of an operator's cab is provided. In order to achieve this, the engine (13) is arranged below an operator's seat (21). Additionally, a floor frame (30) supporting the operator's seat (21) defines a front partition wall (33b) and an upper partition wall (33a) of the engine. Further, the floor frame (30) is configured so as to be tilt-up. Furthermore, a piping (42) and a wiring (46) connected to an equipment (41) on the floor frame (30) side are arranged so as to pass through the vicinity of an axis line of a tilt-up supporting point.

## Description

### Technical Field

The present invention relates to a rear end small revolving type hydraulic shovel (a tight tail revolving hydraulic excavator).

### Background Art

As is well known, a tight tail revolving hydraulic excavator has a profile in which a revolution track of a rear end of an upper revolving body is restricted within an outer width of a base carrier as seen from the above, thereby enabling the excavator to work along a side wall of a building in a city. In such case, generally known is the one equipped with a so-called swing type working equipment that is offset toward the outer width of the base carrier for enabling gutter excavation along the side wall of the building.

Accordingly, the upper revolving body seems to be an approximate circle with its area being small as seen from the above. The swing type working equipment is attached on a front portion of the small circular upper revolving body, and an engine, a counterweight, an operator's cab and other equipments are arranged in an area not occupied by the swing type working equipment, so that the upper revolving body is configured compact.

In the above description, for simply defining the configuration, an operator's cab represents a whole space for an operator, which includes an operator's seat, a foot floor portion provided in front of the operator's seat for positioning operator's foot, and a control device equipped with a control lever and the like. And the operator's cab is differentiated from the operator's seat which merely indicates the seat.

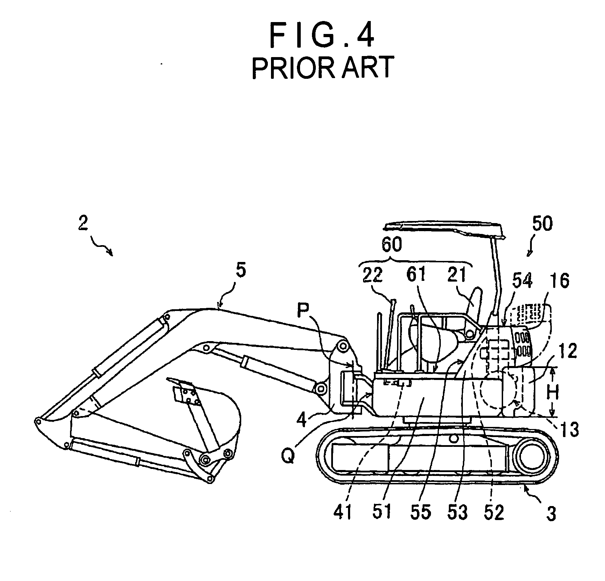

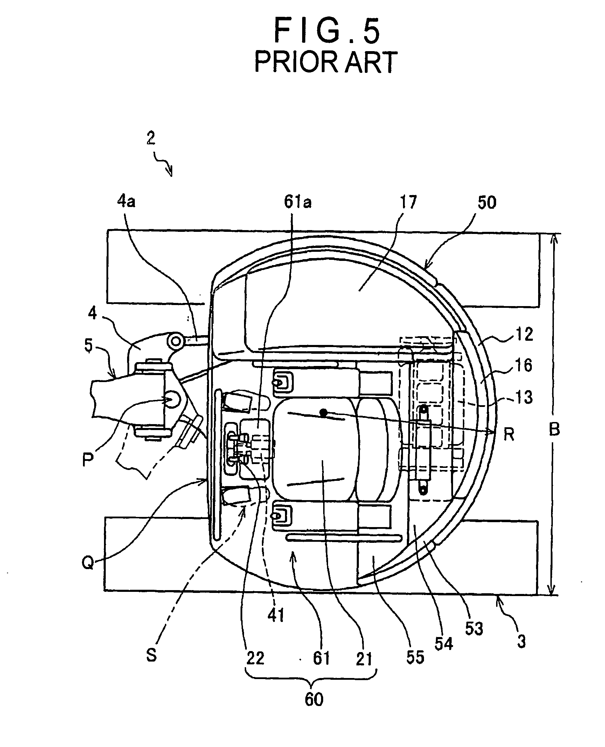

With reference to Figs. 4 and 5, an example of a tight tail revolving hydraulic excavator according to a conventional art will be described. Fig. 4 is a side elevation showing a tight tail revolving hydraulic excavator according to the conventional art, and Fig. 5 is an upper plan view showing a primary portion of the hydraulic excavator.

In Figs. 4 and 5, a tight tail revolving hydraulic excavator 2 is configured that an upper revolving body 50 is revolvably mounted on a base carrier 3 so that a track of a revolution radius R of a rear end of the upper revolving body 50 is restricted within an outer width B of the base carrier 3.

The upper revolving body 50 has a revolving frame 51 in a bottom portion thereof, and a working equipment 5 is vertically oscillatably attached to a front portion of the revolving frame 51 via a swing bracket 4 which can swing horizontally by way of a swing cylinder 4a. And, in order to balance with the working equipment 5, there are provided a counterweight 12 in a rear end of a rear portion of the revolving frame 51, and an engine 13 at the vicinity of a front portion of the counterweight 12. Nearby the engine 13, a frame 52 is vertically provided in an upper portion of the revolving frame 51, and a side partition wall 53, an upper partition wall 54 and a front partition wall 55 of the engine 13 are respectively attached to the frame 52.

Provided in front of the front partition wall 55 is an operator's cab 60 including an operator's seat 21, a floor frame 61 supporting the operator's seat 21 and a control lever 22 dedicated to the working equipment and arranged in a front portion of the floor frame 61. An equipment enclosure 17, in which a fuel tank, an operating oil tank and a main control valve and the like (all not shown) are arranged, is disposed adjacent to the right side of the operator's cab 60. And, a pilot type proportional control valve 41 and other equipments (not shown) connected to the control lever 22 arranged in the floor frame 61 are arranged in a space of the revolving frame 51 located below the floor frame 61.

For enabling periodic inspection of the engine 13, a height H of the counterweight 12 is regulated, so that a vertically open/close inspection cover 16 is attached above the counterweight 12 as shown by chain double-dashed line in Fig. 4. Additionally, for enabling the inspection of the pilot type proportional control valve 41 and the like, an opening is formed in the floor frame 61, and an inspection cap 61a is detachably attached to the opening so as to close it.

Further, protrusion of a front surface Q of the upper revolving body 50 to the front is regulated and also a protruding dimension of the working equipment 5 to the front of a swing center P is regulated, thereby improving stability of a vehicle without affecting the length of the working equipment 5 (hereinafter, referred to as a reach) extending forward from the swing center P.

According to the configuration of the tight tail revolving hydraulic excavator 2 shown in Figs. 4 and 5, the rear end of the upper revolving body 50 will not interfere the side wall of the building when working along the side wall of the building in the city, the tight tail revolving hydraulic excavator 2 can perform gutter excavation along the side wall of the building by swinging the swing type working equipment 5 by a predetermined angle and revolving the upper revolving body 50 by a predetermined angle, and the stability of the vehicle can preferably be secured since the protruding dimension toward the front of the swing center P is regulated.

In the above-described configuration of the tight tail revolving hydraulic excavator 2, the inspection cap 61 a is provided for inspection of the pilot type proportional control valve 41 connected to the control lever 22 and arranged below the floor frame 61. As another conventional example, disclosed in JP2000-72048A, on pages 3 to 4, Fig. 4 is a hydraulic excavator not limited to a tight tail revolving hydraulic excavator having a control valve that is coupled via a link to a control lever arranged in an operator's cab capable of tilting-up and is arranged in a revolving frame below a bottom plate (corresponding to a floor plate) of the operator's cab, so that, by aligning a connecting point of the control lever and the link with the center of a tilt-up supporting point of a bottom plate of the operator's cab, the function of the control valve can be checked while operating the control lever even when the bottom plate of the operator's cab is tilt-up.

However, in the tight tail revolving hydraulic excavator 2 according to the conventional art shown in Figs. 4 and 5, there are some problems caused by that the upper revolving body 50 is configured compact.

As a first problem, since the engine 13 can be accessed only via an opening defined by opening the inspection cover 16, if a failure is occurred in a part other than the expected inspection/maintenance part of the engine 13, the engine 13 likely needs to be removed or suspended with peripheral components, and consequently, the vehicle must be brought to the repair plant, thus the repair cost and the loss for suspending operation being increased.

As a second problem, since the protrusion of the front surface Q of the upper revolving body 50 toward the front is regulated due to the necessity of securing the stability of the vehicle as described above, the floor area of the foot position S of the operator's cab 60 (see Fig. 5) becomes narrow, thus likely causing operator's fatigue due to restricting the space for repositioning the operator's foot. Further, with the same reason described above, even when an adjusting mechanism (not shown) of the operator's seat 21 is adjusted concerning the operator's body size, the effect is limited. Consequently, the configuration of the operator's cab 60 is difficult to provide a comfortable seat.

### Disclosure of the Invention

The present invention is directed to overcome the problems as set forth above, and an object of the present invention is to provide a tight tail revolving hydraulic excavator that can improve maintainability of an engine and secure a wide space for a foot space of an operator's cab.

In order to achieve the above object, in a first configuration, a tight tail revolving hydraulic excavator has an engine below an operator's seat.

With the first configuration, since the operator's seat and the engine are not lined front and back, the installation position of the operator's seat can freely be set. Accordingly, the foot space (floor area) of the operator's cab can widely be secured.

In a second configuration, concerning the first configuration, a floor frame supporting the operator's seat defines a front partition wall and an upper partition wall of the engine.

With the second configuration, following advantages can be attained in addition to that of the first configuration.
(1) Since the substantially whole engine is exposed only by removing the floor frame (i.e., tilting-up the floor frame in an embodiment), the maintainability of the engine can remarkably be improved.
(2) Since the front partition wall and the upper partition wall of the engine need not be arranged independently from the floor frame, the structure of the upper revolving body, in other words, the attaching structure of the floor frame and the partition walls of the engine are simplified, thus reducing the number of worker-hour as well as of components.

In a third configuration, concerning the first and second configurations, the floor frame supporting the operator's seat can be tilt-up.

With the third configuration, following advantages can be attained in addition to that of the first and second configurations.
(1) The whole engine can substantially be exposed only by tilting-up the floor frame without a crane or the like for maintenance purposes, thus enabling to repair or maintain the engine at the operation site without bringing the vehicle to the repair plant. Owing to this, the repair cost and the loss for suspending operation can significantly be reduced.
(2) Since the operator's cab arranged on the floor frame is simultaneously tilt-up, the maintainability of a control valve and other equipments arranged in a space of a revolving frame below the foot space of the operator's cab can remarkably be improved.

In a forth configuration, concerning the third configuration, a piping and a wiring to be connected to the equipments on the floor frame side are arranged so as to pass through the vicinity of an axis line of a tilt-up supporting point.

With the fourth configuration, following advantages can be attained in addition to that of the third configuration.
(1) Since the change in the length of the piping and the wiring due to tilting-up of the floor frame is small, the piping and the wiring will not be stretched or loosen due to tilting-up. Accordingly, the floor frame can be tilt-up while the piping and the wiring being connected, and even though the floor frame has been tilt-up, the functions of the equipments on the floor frame side can be kept, so that a failure in the engine and other equipments can easily be found, thereby remarkably improving the maintainability.

### Brief Description of Drawings

Fig. 1 is a side elevation showing a primary portion of a tight tail revolving hydraulic excavator according to the present invention;
Fig. 2 is a top plan view showing the primary portion of the tight tail revolving hydraulic excavator of Fig. 1;
Fig. 3 is a side elevation showing the primary portion of the tight tail revolving hydraulic excavator of Fig. 1 in a maintenance state;
Fig. 4 is a side elevation showing a tight tail revolving hydraulic excavator according to a conventional art; and
Fig. 5 is a top plan view showing a primary portion of the tight tail revolving hydraulic excavator of Fig. 4.

### Best mode for Carrying out the Invention

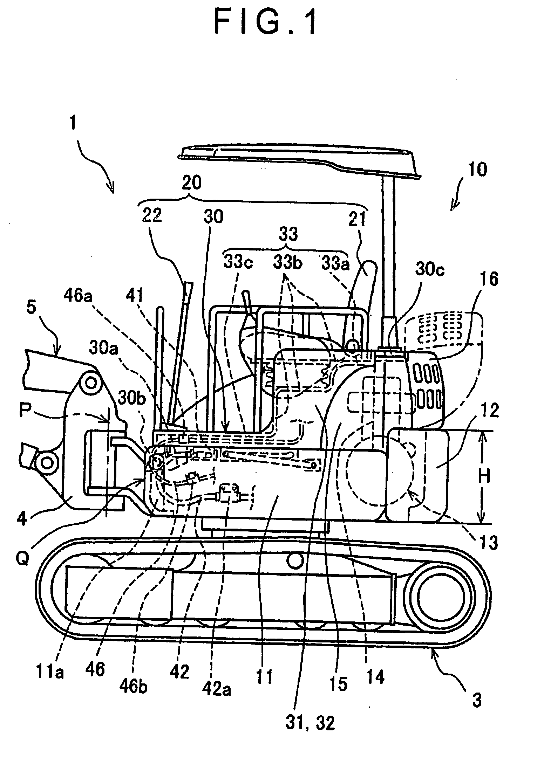

An embodiment of a tight tail revolving hydraulic excavator according to the present invention will be described below with reference to Figs. 1 to 3.

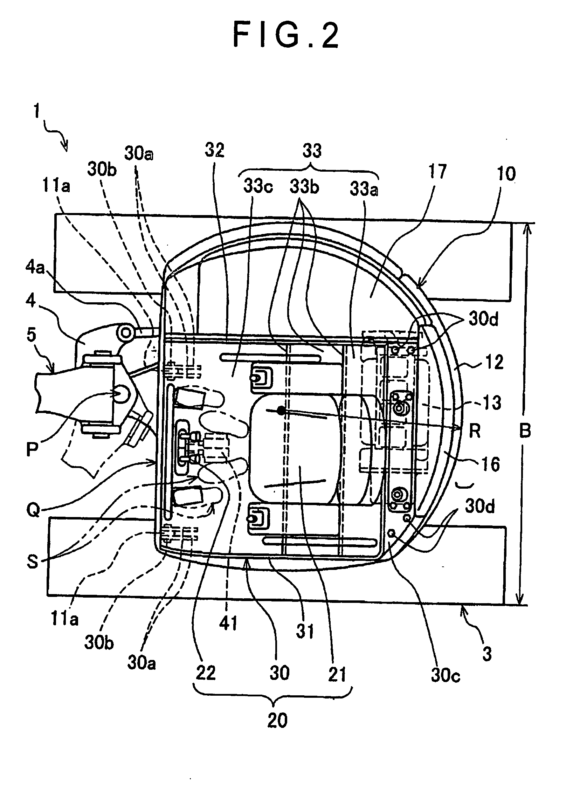

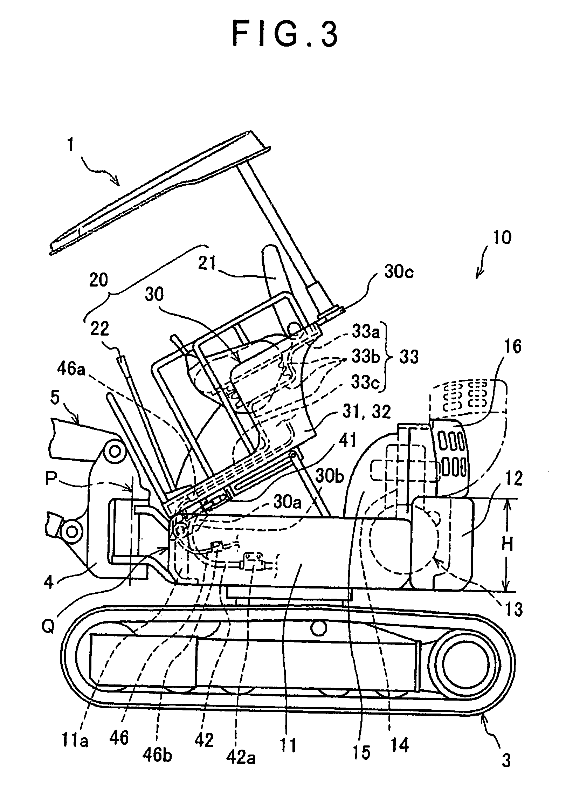

Fig. 1 is a side elevation showing a primary portion of the tight tail revolving hydraulic excavator according to the present invention, Fig. 2 is a top plan view showing the primary portion of the same hydraulic excavator, and Fig. 3 is a side elevation showing the primary portion of the same hydraulic excavator in a maintenance state. Note that, components having the same functions as that shown in Figs. 4 and 5 will be assigned with the same numeric references, and the description thereof will be omitted.

In Figs. 1 to 3, the tight tail revolving hydraulic excavator 1 is configured that an upper revolving body 10 is revolvably mounted above a base carrier 3 so that a track of a revolution radius R of a rear end is restricted within an outer width B of the base carrier 3.

The upper revolving body 10 has a revolving frame 11 in a bottom portion thereof, and a working equipment 5 is vertically oscillatably attached to a front portion of the revolving frame 11 via a swing bracket 4 attached in a horizontally swingable manner. In order to balance with the working equipment 5, there are provided a counterweight 12 in a rear end of a rear portion of the revolving frame 11, and an engine 13 in the vicinity of a front portion of the counterweight 12. Nearby the engine 13, a frame 14 is vertically provided in an upper portion of the revolving frame 11, and a side partition wall 15 as well as a rear inspection cover 16 of the engine 13 are attached on the frame 14.

In an upper portion of the engine 13, an operator's seat 21 is arranged at a position closer to the front with a floor frame 30 supporting the operator's seat 21, and a control lever 22 is arranged in a front portion of the floor frame 30. The operator's seat 21, floor frame 30 and control lever 22 define an operator's cab 20.

The floor frame 30 is configured of side walls 31, 32 located on the left and right sides, and a floor plate 33 connecting the side walls 31, 32, the floor plate 33 having a stepped profile when viewed from the lateral side (see Fig. 1), so that a rear portion 33a defines an upper partition wall 33a of the engine 13, a center portion 33b defines a front partition wall 33b of the engine 13 and a front portion 33c defines a floor plate 33c of the operator's seat.

Additionally, brackets 30a, 30a are attached on left and right portions of the lower front of the floor frame 30, the brackets 30a, 30a being rotatably coupled to brackets 11a, 11a provided in the front portion of the revolving frame 11 with pins 30b, 30b. Further, a flange 30c attached on a rear end of the floor frame 30 is removably fastened on the frame 14 with a bolt screw 30d. With this arrangement, the floor frame 30 can be tilt-up about the pins 30b, 30b as a supporting point with the bolt screw 30d being removed (the state shown in Fig. 3).

A pilot type proportional control valve 41 connected to a lower end portion of the control lever 22 is attached on a lower surface of the floor frame 30. A piping (hydraulic hosepipe) 42 connected to the pilot type proportional control valve 41 is arranged so as to pass through the vicinity of an axis line of a tilt-up supporting point, i.e. the pins 30b, and fixed in the revolving frame 11 with a clamp 42a. Similarly, a wiring (wire harness) 46 connected to an equipment such as an operation panel (not shown) located on the floor frame 30 is arranged so as to pass through the vicinity of the axis line of the tilt-up supporting point and fixed in the floor frame 30 and the revolving frame 11 respectively with clamps 46a, 46b. With such arrangement, the change in the length of the piping 42 and the wiring 46 due to tilting-up of the floor frame 30 become small, so that the piping and the wiring will not be stretched or loosen due to tilting-up (see Fig. 3).

According to the configuration shown in Figs. 1 to 3, following advantages and effects can be obtained.
(1) Since the operator's seat 21 is arranged in the upper front area of the engine 13, the position of the operator's seat 21 can be set freely in the front and back directions without the restriction caused by the location of the engine 13. Then, as shown in Fig. 2, the space (the floor area) of the foot position S in the operator's cab 20 can widely be secured, which provides the comfortable seat concerning the operator's body size when using an adjusting mechanism (not shown) for the operator's seat 21.
(2) As for the floor plate 33 of the floor frame 30, since the rear portion 33a defines the upper partition wall 33a of the engine 13 and the central portion 33b defines the front partition wall 33b of the engine 13, merely removing the floor frame 30 (i.e., tilting-up the floor frame 30 in the above-described embodiment) can substantially expose the substantially whole engine 13, thereby remarkably improving the maintainability of the engine 13.
   Additionally, since the upper partition wall 33a and the front partition wall 33b of the engine 13 are integrally formed and are not separated from the floor frame 30, the structure of the upper revolving body 10, in other words, the attaching structure of the floor frame 30 and the partition walls of the engine are simplified, thus reducing the number of worker-hour as well as of components.
(3) As shown in Fig. 3, since the floor frame 30 is arranged to be tilt-up, the whole engine 13 can substantially be exposed by tilting-up the floor frame 30 without a crane or the like for maintenance purposes, accordingly enabling to repair or maintain the engine at the operation site without bringing the vehicle to the repair plant. Owing to this, the repair cost and the loss for suspending operation can significantly be reduced. Additionally, the maintainability of the pilot type proportional control valve 41 and other equipments (not shown) arranged below the foot space of the operator's cab 20 in the space of the revolving frame 11 can remarkably be improved like the above-described advantage.
(4) Since the piping (hydraulic hosepipe) 42 and the wiring (wire harness) 46 connected to the pilot type proportional control valve 41 and other equipments (not shown) arranged on the floor frame 30 side are arranged so that the piping 42 and the wiring 46 pass through the vicinity of the tilt-up supporting point, the floor frame 30 can be tilt-up while the piping 42 and the wiring 46 are connected. Accordingly, even while the floor frame 30 is tilt-up, since the functions of the equipments on the floor frame 30 side can be kept, a failure in the engine and other equipments can easily be found, thereby remarkably improving the maintainability.

Incidentally, in the above-described embodiment, although the hydraulic hosepipe 42 and the wire harness 46 are exemplified as the piping and the wiring connected to the equipments on the floor frame 30, it is not limited thereto, and for instance, a refrigerant piping, a hot water piping and a temperature sensor piping etc. may be applied, in case that a cabin and an automatic air conditioner (both not shown) are provided on the floor frame 30.

Further, when the floor frame 30 is tilt-up, a labor-saver using at least any way of gas pressure, hydraulic pressure, spring force, feed screw and balance weight can be used.

Thus, the tight tail revolving hydraulic excavator can be configured compact, in which the maintainability of the engine can remarkably be improved and the foot space of the operator's cab can widely be secured.

### Industrial Applicability

The present invention is useful as the tight tail revolving hydraulic excavator that can improve the maintainability of the engine and secures the wide foot space of the operator's cab.

## Claims

1. A tight tail revolving hydraulic excavator having an engine (13) below an operator's seat (21), wherein a floor frame (30) supporting the operator's seat (21) has a stepped portion defined by a front partition wall (33b), an upper partition wall (33a) of the engine, and a floor plate (33c) of an operator's cab.

2. The tight tail revolving hydraulic excavator according to claim 1, wherein the floor frame supporting an operator's seat is elevated in a rear portion thereof about a tilt-up supporting point provided in a front portion.

3. The tight tail revolving hydraulic excavator according to claim 1 or 2, wherein a piping (42) and a wiring (46) connected to an equipment (41) provided on the floor frame (30) side are arranged so as to pass through the vicinity of an axis line of the tilt-up supporting point.
